# EUROPÄISCHE PATENTSCHRIFT

(11) **EP 1 648 987 B1**
(45) Veröffentlichungstag und Bekanntmachung des Hinweises auf die Patenterteilung: **25.05.2011**
(21) Anmeldenummer: 04763445.6
(22) Anmeldetag: 23.07.2004
(51) Int. Cl.: C11B 1/00, C11C 5/00, C09K 5/06

(54) **VERFAHREN ZUR HERSTELLUNG VON ROHSTOFFEN FÜR DIE KERZENHERSTELLUNG SOWIE EIN THERMOSPEICHERMATERIAL**
METHOD FOR THE PRODUCTION OF RAW MATERIALS FOR CANDLE PRODUCTION AND A HEAT STORE MATERIAL
PROCEDE POUR PRODUIRE DES MATIERES PREMIERES POUR LA PRODUCTION DE BOUGIES AINSI QUE MATIERE ACCUMULATRICE DE CHALEUR

(30) Priorität: 24.07.2003 DE 10333862
(43) Veröffentlichungstag der Anmeldung: 26.04.2006
(73) Patentinhaber: Tischendorf, Dieter, 36115 Hilders (DE)
(72) Erfinder: Tischendorf, Dieter, 36115 Hilders (DE)
(74) Vertreter: Müller, Eckhard
(86) Internationale Anmeldenummer: PCT/EP2004/008269
(87) Internationale Veröffentlichungsnummer: WO 2005/010135

(56) Entgegenhaltungen:
- EP-A- 1 228 701
- WO-A-96/05278
- WO-A-03/038020
- DE-A- 4 329 187
- US-A1- 2002 005 007
- US-A1- 2003 091 949
- DATABASE WPI Section Ch, Week 200229 Derwent Publications Ltd., London, GB; Class A92, AN 2002-231642 XP002311004 & JP 2001 355116 A (OIZUMI R) 26. Dezember 2001 (2001-12-26)
- "CD RÖMPP CHEMIE LEXIKON VERSION 1.0" 1995, GEORG THIEME VERLAG , STUTTGART/NEW YORK * Auszüge: "Gemische" und "Gemenge" *
- "Kerze" , [Online] Retrieved from the Internet: URL:http://de.wikipedia.org/wiki/Kerze> [retrieved on 2007-07-24]
- DATABASE WPI Section Ch, Week 198916 Thomson Scientific, London, GB; Class A97, AN 1989-119966 & JP 01 067580 A (YOSHIDA) 14 March 1989 (1989-03-14)
- DATABASE WPI Section Ch, Week 199443 Thomson Scientific, London, GB; Class C04, AN 1994-346296 & JP 06 269639 A (YOKOHAMA) 27 September 1994 (1994-09-27)

## Beschreibung

Die Erfindung betrifft ein Verfahren zur Herstellung von Rohstoffen für die Kerzenherstellung sowie ein Thermospeichermaterial, wie beispielsweise Wachse, wobei aus einem Lipide enthaltenden Ausgangsstoff die Lipide extrahiert und/oder raffiniert und/oder hydriert werden.

### Stand der Technik

Als Rohstoffe für die Kerzenherstellung dienen heutzutage in erster Linie Paraffin oder Bienenwachs. Für Stundenbrenner und Öllichte finden auch feste beziehungsweise gehärtete Pflanzenfette oder Fischöle Verwendung. Zur Verbesserung der Verarbeitbarkeit für Glanzeffekte und dergleichen, können Mikrowachse oder pflanzliche Hartwachse wie Kandelilla-Kanauba oder Japanwachs beigemischt werden.

Bei diesen Stoffen handelt es sich ausschließlich um mineralische oder pflanzliche Fette und/oder Öle, die jeweils in separater Weise aus einem einzelnen Ausgangsstoff gewonnen werden.

So beschreibt EP-A 1 228 701 ein Verfahren zur Gewinnung von nativen, organischen Stoffen, wie z. B. Öle, Fette und Wachse, mit Hilfe der Zentrifugalkraft umfassend die Schritte a) Zerkleinerung des Ausgangsprodukts, b) Extraktion der lipophilen Stoffe mit Hilfe eines Extraktionsmittels vor oder nach einer Wasserzugabe und c) Zentrifugation und Auftrennung des erhaltenen Breis in eine wässrige, feste Bestandteile enthaltende Phase und eine flüssige, organische Phase.

US-A 2002/0005007 bezieht sich auf die Bereitstellung einer möglichst rußfreien und gleichzeitig Paraffin enthaltenden Kerze. Dies wird erreicht durch den Einsatz einer Kerzenbrennmasse enthaltend hydrierte Triglyceride und/oder freie Fettsäuren zusammen mit Paraffin, wobei die Triglyceride und freien Fettsäuren z. B. aus Tierfetten wie Talg durch bekannte Trennungs- und Hydrierverfahren gewonnen werden können.

Die mineralischen Öle und Fette, die als Rohstoff in der Kerzenherstellung verwendet werden können, fallen bei der Verarbeitung des Erdöls an, wie beispielsweise das Erdölderivat Paraffin. Aufgrund der begrenzten Erdölvorkommen und der verbesserten Verarbeitungstechniken der Erdöl verarbeitenden Industrie fallen bei der Aufarbeitung des Erdöls immer weniger solcher Erdölderivate an, die zur Kerzenherstellung verwendet werden können. Als Folge davon verteuern sich solche Erdölprodukte, so dass eine Konzentration dieser Erdölderivate auf Produkte erfolgt, die in der Wertschätzung des Verbrauchers einen höheren Rang einnehmen als eine Kerze. Tierische Fette werden in der Regel aus Schlachthofabfällen hergestellt, die ohne nennenswerte Wasserzugabe in Kochern auf 120°C erhitzt werden. Durch thermischen Eiweißabbau werden Geruch und Geschmack von Grieben und Fett jedoch stark beeinflusst, was zu Fetten minderer Qualität führt. Beim Nassschmelzverfahren werden die tierischen Ausgangsstoffe zunächst mechanisch zerkleinert, mit direktem Dampf auf 90°C erhitzt und der Talg ausgeschmolzen. Die praktisch fettfreien Grieben werden mit Dekantierzentrifugen vom Leimwasser getrennt, aus dem das Fett durch Kühlung abgeschieden wird.

Von den pflanzlichen und tierischen Fetten und Ölen dienen etwa 80 % der gesamten Weltproduktion der Ernährung. Etwa 20 % davon - in der Regel solche, die für den Humanverbrauch nicht geeignet sind - werden technischen Anwendungen zugeführt und dienen somit als Rohstoff für die chemische Industrie.

Bei den pflanzlichen Fetten und Ölen unterscheidet man je nach Herkunft zwischen Samenfetten (zum Beispiel Palmkernöl) und Fruchtfleischfetten (zum Beispiel Palmöl). Die Gewinnung der Fette und Öle erfolgt durch Auspressen und/oder Extrahieren mit organischen Lösungsmitteln oder Wasser.

Pflanzliche und tierische Fette und Öle sind Triglyceride mittlerer oder ungesättigter Fettsäuren.

Kennzeichnend für die Herstellung von Kerzen ist bisher, dass, sofern Fischöle und pflanzliche Öle und Fette als Rohstoffe verwendet werden, diese separat gewonnen und gegebenenfalls später im Herstellungsverfahren der Kerzen miteinander vermischt werden. Diese Fette und Öle werden, um die notwendige Reinheit und Konsistenz als Rohstoff für die Kerzenherstellung zu erreichen, raffiniert und/oder hydriert.

Bei der Zubereitung von Nahrungsmitteln im gewerblichen und privaten Bereich werden große Mengen Speiseöle und -fette pflanzlichen Ursprungs eingesetzt, insbesondere zum Braten und Frittieren. Der Anteil dieser Fette, der nicht verzehrt wird, muss als Reststoff verwertet werden. Aus dem Bereich der Gastronomie und der Lebensmittelindustrie beträgt das sammelbare Potential an Brat- und Frittierfetten in Deutschland nach Schätzungen zwischen 150.000 bis 280.000 t pro Jahr. Bisher gingen diese Altspeisefette größtenteils als sogenannte Futteröle in die Mischfutterindustrie. Die illegale Entsorgung von Motoren- oder Trafoöl in Altspeisefetten, die zu dem Dioxinskandal in Belgien geführt hat, veranschaulicht die Notwendigkeit, Altspeiseöle und -fette aus der Futtermittelproduktion zu entfernen, da solche Verunreinigungen über die Tierfütterung auch in die menschliche Nahrungskette gelangen können.

Auch die tierischen Fette und Öle, die als Schlachtnebenprodukte anfallen, gingen früher größtenteils in die Mischfutterindustrie. Aufgrund verschiedener Tierkrankheiten, wie beispielsweise BSE, ist es wünschenswert und notwendig, solche belasteten Materialien aus der Nahrungskette des Menschen zu entfernen.

Um dies zu erreichen, werden diese Produkte in der chemischen Industrie für Schmierstoffe, zunehmend auch zur energetischen Nutzung in Heiz- und Verstromungsanlagen, Biogasanlagen und Biodieselanlagen eingesetzt.

### Problem

Aufgabe der Erfindung ist es daher, ein Verfahren zur Herstellung von Rohstoffen für die Kerzenherstellung und Thermospeichermaterial, wie beispielsweise Wachse, zur Verfügung zu stellen, wobei als Ausgangsstoff eine Mischung lipidhaltiger organischer Materialien, insbesondere Mischungen aus Nahrungsmittelresten, Altspeisefetten Lebensmittelrückläufen aus der Nahrungsmittelindustrie sowie organischen Haushaltsrückläufen und/oder tierischen Fetten verwendet werden sollen.

### Problemlösung

Diese Aufgabe wird gelöst durch ein Verfahren mit den Merkmalen des Oberbegriffes des Anspruchs 1, wobei als Ausgangsstoff eine Mischung aus Nahrungsmittelresten, Altspeisefetten und/oder Lebensmittelrückläufen aus der Nahrungsmittelindustrie , und/oder tierischen Fette in einem ersten Verfahrensschritt gewaschen und zerkleinert wird, in einem zweiten Verfahrensschritt die Lipide isoliert werden und abschließend die Lipide zu dem Rohstoff für die Kerzenherstellung oder zu dem Thermospeichermaterial raffiniert und/oder hydriert werden.

Hierdurch ist es ermöglicht, die Lipide aus einer Mischung organischer Ausgangsmaterialien zu extrahieren, ohne auf deren Ursprung Rücksicht nehmen zu müssen, da nach dem erfindungsgemäßen Verfahren die Lipide aus allen organischen Materialien extrahiert werden. Somit können sowohl lipidhaltige organische Materialien rein pflanzlichen Ursprungs als auch rein tierischen Ursprungs sowie Mischungen daraus nach dem erfindungsgemäßen Verfahren extrahiert werden. Nach Verarbeitung der Lipide ist es kaum nachvollziehbar, welches Lipid tierischen oder pflanzlichen Ursprungs ist. Auch ist es nach dem erfindungsgemäßen Verfahren unerheblich, welchen Anteil an tierischen oder pflanzlichen lipidhaltigen organischen Materialien die Mischung aufweisen muss. Vielmehr sind alle Mischverhältnisse zwischen 0 % und 100 % einzelner Komponenten möglich.

Nach einer ersten vorteilhaften Ausgestaltung der Erfindung wird die Mischung lipidhaltiger organischer Materialien vor dem zweiten Verfahrensschritt aufgeschlämmt. Dadurch ist gewährleistet, dass es zu einer guten Durchmischung des Ausgangsstoffs kommt und dabei im wesentlichen eine homogene Masse entsteht.

Vorteilhafterweise wird zwischen dem ersten und zweiten Verfahrensschritt die Mischung der lipidhaltigen organischen Materialien bei einem Überdruck von 10⁵ Pa bis 5 x 10⁵ Pa, bevorzugt 3 x 10⁵ Pa, und einer Temperatur zwischen 353 K und 453 K, bevorzugt 403 K, dehydriert und sterilisiert. Dies hat eine Denaturierung der Eiweiße und die Elimination von Bakterien und Viren im Sinne eines Standard-Sterilisationsprozesses zur Folge.

Nach der Erfindung ist es vorgesehen, den Rohstoff für die Kerzenherstellung und für das Thermospeichermaterial durch Zentrifugation, Filtrierung, Fragmentation oder Lösungsmitteleluation zu ernten.

Weiterhin ist es vorgesehen, die so gewonnenen Lipide der Raffination und/oder der Hydrierung in flüssiger Form, vorzugsweise mit einer Temperatur von 333 K bis 353 K, insbesondere 343 K, zuzuführen. Es kann während der Raffination eine Veresterung und/oder weitere Rückveresterung der Fettsäuren zu Lipiden erfolgen, an die sich eine chemische und/oder physikalische Raffination anschließen kann.

Die Veresterung beziehungsweise Rückveresterung lässt sich durch Erhitzen von Altfetten mit entsprechend hoher Säurezahl durch Zugabe von in einer der Säurezahl leicht im Überschuss befindlichem Glycerin und einer Mineralsäure durchführen. Durch vorsichtiges Waschen mit Sodalösung oder mit verdünnter Natronlauge lässt sich eine Säurezahl < 1 erreichen.

Während der Raffination kann fakultativ eine Entschleimung erfolgen. Daran schließt sich eine Neutralisation, eine Waschung und Trocknung an. Die Raffination wird schließlich durch eine Bleichung, Filtration und/oder Desodorierung des Produkts abgeschlossen.

Im Rahmen der Raffination können je nach Qualität des Ausgangsstoffes noch eine weitere Entschleimung und/oder Neutralisation stattfinden.

Bei der anschließenden Hydrierung werden durch Anlagerung von Wasserstoff unter Einsatz von Katalysatoren die gewünschten Produkteigenschaften erhalten, wobei für unterschiedliche Jodzahlen verschiedene Weiterverarbeitungsmöglichkeiten vorgesehen sind.

Die sich an die Raffination anschließende Hydrierung kann unter einem Druck von 1 x 10⁵ Pa - 50 x 10⁵ Pa, insbesondere 3 x 10⁵ Pa - 5 x 10⁵ Pa, erfolgen. Um die Hydrierung der Lipide zu beschleunigen, werden Katalysatoren, insbesondere Nickel oder ein Edelmetall, wie beispielsweise Platin, eingesetzt.

Soll der mit dem erfindungsgemäßen Verfahren hergestellte Rohstoff im Gießverfahren zur Kerzenherstellung weiterverarbeitet werden, erfolgt die Hydrierung bis zu einer Jodzahl von ≤ 60. Rohstoffe mit dieser Jodzahl eignen sich jedoch nicht nur für das Gießverfahren, sondern auch für ein pastöses Abfüllen. Soll der Rohstoff jedoch im Pressverfahren weiterverarbeitet werden, werden die Lipide bis zu einer Jodzahl ≤ 20 hydriert.

Nach einem weiteren vorteilhaften Gedanken der Erfindung ist es vorgesehen, dass als Ausgangsstoff eine Mischung lipidhaltiger organischer Materialien pflanzlichen und tierischen Ursprungs verwendet wird.

Dabei kann es sich empfehlen, dass der Mischung lipidhaltiger organischer Materialien auch mineralische Öle und Fette zugesetzt werden, die mit dem erfindungsgemäßen Verfahren ebenfalls zu den gewünschten Rohstoffen für die Kerzenherstellung beziehungsweise für Thermospeichermaterial verarbeitet werden.

Das Gleiche gilt für Kohlenwasserstoffe, die der Mischung lipidhaltiger organischer Materialien zugesetzt werden.

Nach einem weiteren vorteilhaften Gedanken der Erfindung ist es vorgesehen, dass die verschiedenen Lipide innerhalb der Mischung des Ausgangsstoffes sowie auch die mineralischen Öle und Fette beziehungsweise die zugesetzten Kohlenwasserstoffe zu Triglyceriden verarbeitet werden. Die Triglyceride eignen sich besonders gut für die Verwendung als Rohstoff zur Kerzenherstellung beziehungsweise für das Thermospeichermaterial.

Um einen besonders einheitlichen und homogenen Rohstoff für die Kerzenherstellung beziehungsweise für das Thermospeichermaterial zu erhalten, hat es sich dabei als vorteilhaft erwiesen, die Lipide innerhalb der Mischung des Ausgangsstoffes sowie die zugesetzten mineralischen Öle und/oder Fette beziehungsweise die zugesetzten Kohlenwasserstoffe zu einem einheitlichen Triglycerid zu verarbeiten.

Besonders vorteilhaft ist es, wenn vor der Isolierung der Lipide die freien Fettsäuren aus der Mischung der Ausgangsstoffe beziehungsweise den zugesetzten Stoffen extrahiert werden. Dazu wird gegebenenfalls die Säurezahl bestimmt und die enthaltenen freien, unveresterten Fettsäuren, beispielsweise mit Hilfe von Natriumhydroxid, neutralisiert.

Bevor die nach dem erfindungsgemäßen Verfahren gewonnenen Rohstoffe weiterverarbeitet werden, können ihnen noch Farb- und/oder Duftstoffe zugesetzt werden. Die Kriterien, welche Duft- und/oder Farbstoffe in welcher Menge zugesetzt werden, hängt von der weiteren Verarbeitung der Rohstoffe ab.

Die so gewonnenen Rohstoffe können unter anderem zur Kerzenherstellung nach bekannten Gieß-, Press- oder Ziehverfahren beziehungsweise für pastöse Abfüllverfahren oder Schäumverfahren verwendet werden.

Weitere Ziele, Vorteile, Merkmale und Anwendungsmöglichkeiten der vorliegenden Erfindung ergeben sich aus der nachfolgenden Beschreibung der Ausführungsbeispiele. Dabei bilden alle beschriebenen Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Ausführungsbeispiel

Nahrungsmittelreste und organische Restprodukte werden gesammelt, gewaschen, im Wasser aufgeschlämmt und auf eine Größe von 2 - 3 mm zerkleinert. Das so gewonnene Ausgangsmaterial wird in einer Wiederaufbereitungsanlage getrennt. Fest- und Fremdstoffe werden so entfernt. Anschließend erfolgt die Dehydrierung und Sterilisation des Materials bei 403 K unter einem Überdruck von 3 x 10⁵ Pa und einer Einwirkzeit von 20 Minuten, um Bakterien, Viren und Proteine zu denaturieren und zu eliminieren. Aus der dann vorliegenden sterilisierten Masse wird die Lipidfraktion abgelassen und abgekühlt.

Die flüssige Lipidfraktion wird bei einer Temperatur von ca. 343 K der Raffination zugeführt, wobei je nach Säurezahl zunächst eine Veresterung durchgeführt wird, um die Menge der Abfallprodukte zu reduzieren. Diese Veresterung kann im Kreislauf mehrfach wiederholt werden.

Daran schließt sich die eigentliche Raffination an. Es erfolgen mehrfach Säure- und Laugenbehandlungen bei unterschiedlichen Drücken, Temperaturen und Verweilzeiten. Die Säure- und Laugenbehandlungen werden von Waschungen unterbrochen. Anschließend erfolgt eine Phase der Desodorierung bei hohen Temperaturen und langer Verweilzeit, um in eine Phase der Bleichung überzugehen.

Die so gewonnene flüssige Masse wird einem Hydrierprozess zugeführt, bei dem es unter einem Druck von 1 x 10⁵ Pa - 50 x 10⁵ Pa und einer Temperatur von 453 K bis 553 K und entsprechend langer Verweilzeit unter Einsatz eines geeigneten Katalysators, wie Platin oder Nickel, zu Veränderungen der Kohlenstoffkette kommt. Idealerweise wird bis zu einer Jodzahl von ≤ 20 für die Weiterverarbeitung im Pressverfahren hydriert. Für das Gießverfahren beziehungsweise für das pastöse Abfüllen eignet sich eine Hydrierung bis Jodzahlen ≤ 80.

Anschließend wird das flüssige Produkt bei ca. 343 K über eine beheizte Leitung, wobei auch andere Temperaturen im Bereich von 317 K bis 355 K möglich sein können, in ein beheiztes Sammelbecken gegeben. Dort werden der Mischung Farben und Duftstoffe zugesetzt. Ebenso können nun andere reine Fette, Öle und Paraffine zugemischt werden, um dem Produkt die gewünschten Eigenschaften zu verleihen.

Aus dem Sammelbecken erfolgt die Zufuhr der heißen Masse zu einem Kristallisator, der durch Applikation einer hohen Temperaturdifferenz zu einer Abkühlung der Masse führt. Dies resultiert in einem grob- und/oder feinkristallinen Pulver, welches über eine Vakuumleitung bei unterschiedlichem Unterdruck verschiedenen Pressen, Kolbenpressen, Exzenterpressen zugeführt werden kann. Dort wird die Masse durch Pressdruck und Verformung gegebenenfalls unter Temperaturapplikation zu Kerzen verarbeitet.

Um ein gewünschtes Finish zu erhalten, kann dabei mit geheizten Werkzeugen gearbeitet werden, wodurch auch Überpressvorgänge vermieden werden können. Diese Pressmethode hat sich als effiziente Verarbeitungsform bewährt.

Die Weiterleitung des flüssigen Rohstoffes kann auch in verschiedenen manuell oder industriell zu bedienenden Gießanlagen erfolgen, in denen es durch sich mit der flüssigen Masse füllenden Formen zur Ausgestaltung der gewünschten Kerzenform durch kontrolliertes Erkalten kommt. Dabei kann die Menge des einfließenden Produktes durch einen Fühler geregelt werden. Der Abkühlprozess kann durch Applikation von Kälte über Kälteanlagen oder Ventilatoren beschleunigt werden.

Um unerwünschte Verformungen oder Einziehungen zu vermeiden, ist es vorgesehen, einen zweiten Gießprozess anzuschließen. Dieser kann ebenfalls wieder in Füllstationen automatisiert oder auch manuell durchgeführt werden.

Der Rohstoff oder die Rohstoffmischung kann jedoch auch in einem Kristallisator so weit vorgekühlt werden, dass ein pastöser Zustand erreicht wird. In dieser pastösen Form kann der Rohstoff in ein gewünschtes formgebendes Gefäß, gegebenenfalls unter Druckapplikation, abgefüllt werden.

## Patentansprüche

1. Verfahren zur Herstellung von Rohstoffen für die Kerzenherstellung und für Thermospeichermaterial, wie beispielsweise Wachse, wobei aus einem Lipide enthaltenden Ausgangsstoff die Lipide extrahiert und/oder raffiniert und/oder hydriert werden, **dadurch gekennzeichnet, dass** als Ausgangsstoff eine Mischung aus Nahrungsmittelresten, Altspeisefetten und/oder Lebensmittelrückläufen aus der Nahrungsmittelindustrie, und/oder Tierfetten, die als Schlachtnebenprodukt anfallen,
a) in einem ersten Verfahrensschritt gewaschen und zerkleinert wird,
b) in einem zweiten Verfahrensschritt die Lipide isoliert und zu Triglyceriden verarbeitet werden,
c) anschließend die Triglyceride zu dem Rohstoff für die Kerzenherstellung oder zu dem Thermospeichermaterial raffiniert und hydriert werden.

2. Verfahren nach Anspruch 1, **dadurch gekennzeichnet, dass** die Mischung vor dem zweiten Verfahrensschritt aufgeschlämmt wird.

3. Verfahren nach Anspruch 1 oder 2, **dadurch gekennzeichnet, dass** zwischen dem ersten und zweiten Verfahrensschritt in einem weiteren Verfahrensschritt der Ausgangsstoff bei einem Überdruck von 10⁵ Pa bis 5 x 10⁵ Pa, bevorzugt 3 x 10⁵ Pa, und einer Temperatur zwischen 353 K und 453 K, bevorzugt 403 K, dehydriert und sterilisiert wird.

4. Verfahren nach Anspruch 1 bis 3, **dadurch gekennzeichnet, dass** der Rohstoff für die Kerzenherstellung oder das Thermospeichermaterial durch einen der folgenden Verfahrensschritte gewonnen wird:
a) Zentrifugation,
b) Filtrierung,
c) Fragmentation,
d) Lösungsmitteleluation.

5. Verfahren nach einem der vorhergehenden Ansprüche, **dadurch gekennzeichnet, dass** die Lipide der Raffination und/oder Hydrierung in flüssiger Form, vorzugsweise mit einer Temperatur von 333 K bis 353 K, insbesondere 343 K, zugeführt werden.

6. Verfahren nach einem der vorhergehenden Ansprüche, **dadurch gekennzeichnet, dass** die Lipide in einem Kreislaufprozess, gegebenenfalls mehrfach, verestert und/oder rückverestert werden.

7. Verfahren nach einem der vorhergehenden Ansprüche, **dadurch gekennzeichnet, dass** die Raffination wenigstens einen der folgenden Verfahrensschritte umfasst:
a) Entschleimung (Seifenaufspaltung)
b) Neutralisation(Entsäuerung und Entsalzung)
c) Waschung
d) Trocknung
e) Bleichung sowie gegebenenfalls Nachbleichung
f) Filtration
g) Desodorierung.

8. Verfahren nach einem der vorhergehenden Ansprüche, **dadurch gekennzeichnet, dass** die Lipide hydriert, insbesondere druckhydriert, werden.

9. Verfahren nach Anspruch 7, **dadurch gekennzeichnet, dass** die Lipide unter Einsatz eines Katalysators hydriert werden.

10. Verfahren nach Anspruch 9, **dadurch gekennzeichnet, dass** als Katalysator Nickel oder ein Edelmetall, wie beispielsweise Platin, verwendet wird.

11. Verfahren nach einem der Ansprüche 8 bis 10, **dadurch gekennzeichnet, dass** die Lipide bis zu einer Jodzahl ≤80 hydriert werden.

12. Verfahren nach einem der Ansprüche 8 bis 10, **dadurch gekennzeichnet, dass** die Lipide bis zu einer Jodzahl ≤20 hydriert werden.

13. Verfahren nach einem der vorhergehenden Ansprüche, **dadurch gekennzeichnet, dass** als Ausgangsstoff eine Mischung lipidhaltiger organischer Materialien pflanzlichen und tierischen Ursprungs verwendet wird.

14. Verfahren nach einem der vorhergehenden Ansprüche, **dadurch gekennzeichnet, dass** der Mischung lipidhaltiger organischer Materialien mineralische Öle und Fette zugesetzt werden.

15. Verfahren nach einem der vorhergehenden Ansprüche, **dadurch gekennzeichnet, dass** der Mischung lipidhaltiger organischer Materialien Kohlenwasserstoffe zugesetzt werden.

16. Verfahren nach einem der vorhergehenden Ansprüche, **dadurch gekennzeichnet, dass** die verschiedenen Lipide innerhalb der Mischung des Ausgangsstoffs zu Triglyceriden verarbeitet werden.

17. Verfahren nach einem der vorhergehenden Ansprüche, **dadurch gekennzeichnet, dass** die Lipide innerhalb der Mischung des Ausgangsstoffes zu einem einheitlichen Triglycerid verarbeitet werden.

18. Verfahren nach einem der vorhergehenden Ansprüche, **dadurch gekennzeichnet, dass** vor Isolierung der Lipide freie Fettsäuren aus der Mischung extrahiert werden.

19. Verfahren nach einem der vorhergehenden Ansprüche, **dadurch gekennzeichnet, dass** den gewonnenen Rohstoffen Farb- und/oder Duftstoffe zugesetzt werden.

20. Verfahren nach einem der vorhergehenden Ansprüche, **dadurch gekennzeichnet, dass** aus den gewonnenen Rohstoffen Kerzen im Gieß-, Press- oder Ziehverfahren bzw. durch pastöse Abfüllverfahren oder Schäumverfahren hergestellt werden.

21. Verwendung einer Mischung aus Nahrungsmittelresten, Altspeisefetten und/oder Lebensmittelrückläufen aus der Nahrungsmittelindustrie und/oder Tierfetten, die als Schlachtnebenprodukt anfallen, als ein Lipide enthaltender Ausgangsstoff zur Herstellung von Rohstoffen für die Kerzenherstellung und für Thermospeichermaterial, wie beispielsweise Wachse, wobei die Lipide aus dem Ausgangsstoff extrahiert und/oder raffiniert und/oder hydriert werden, wobei
a) in einem ersten Verfahrensschritt der Ausgangsstoff gewaschen und zerkleinert wird,
b) in einem zweiten Verfahrensschritt die Lipide isoliert und zu Triglyceriden verarbeitet werden,
c) anschließend die Triglyceride zu dem Rohstoff für die Kerzenherstellung oder zu dem Thermospeichermaterial raffiniert und hydriert werden.

## Claims

1. Method of producing raw materials for candle production and for heat storage material such as, for example, wax, wherein the lipides are extracted and/or refined and/or hydrogenated from a starting material containing lipides, **characterised in that** as starting material a mixture of food residues, old cooking fats and/or foodstuff returns from the foodstuff industry and/or animal fats arising as slaughter byproducts,
a) is washed and comminuted in a first method step,
b) the lipides are isolated and processed to form triglycerides in a second method step and
c) subsequently the triglycerides are refined and hydrogenated to form the raw material for the candle production or for the heat storage material.

2. Method according to claim 1, **characterised in that** the mixture is slurried before the second method step.

3. Method according to claim 1 or 2, **characterised in that** between the first and second method steps the starting material is dehydrogenated and sterilised at an excess pressure of 10⁵ Pa to 5 x 10⁵ Pa, preferably 3 x 10⁵ Pa, and a temperature between 353 K and 453 K, preferably 403 K in a further method step.

4. Method according to claim 1 to 3, **characterised in that** the raw material for the candle production or the heat storage material is obtained by one of the following method steps:
a) centrifuging,
b) filtration,
c) fragmentation and
d) solvent elution.

5. Method according to any one of the preceding claims, **characterised in that** the lipides are fed to the refining and/or hydrogenation in liquid form, preferably at a temperature of 333 K to 353 K, particularly 343 K.

6. Method according to any one of the preceding claims, **characterised in that** the lipides are esterified and/or re-esterified, optionally a plurality of times, in a circuit process.

7. Method according to any one of the preceding claims, **characterised in that** the refining comprises at least one of the following method steps:
a) deslimed (soap splitting)
b) neutralisation (deacidification and desalination)
c) washing
d) drying
e) bleaching as well as optionally re-bleaching
f) filtration
g) deodorising.

8. Method according to any one of the preceding claims, **characterised in that** the lipides are hydrogenated, particularly pressure-hydrogenated.

9. Method according to claim 7, **characterised in that** the lipides are hydrogenated with use of a catalyst.

10. Method according to claim 9, **characterised in that** nickel or a noble metal such as, for example, platinum is used as catalyst.

11. Method according to any one of claims 8 to 10, **characterised in that** the lipides are hydrogenated up to an iodine count at most equal to 80.

12. Method according to any one of claims 8 to 10, **characterised in that** the lipides are hydrogenated up to an iodine count at most equal to 20.

13. Method according to any one of the preceding claims, **characterised in that** a mixture of organic materials of plant and animal origin with lipide content is used as starting material.

14. Method according to any one of the preceding claims, **characterised in that** mineral oils and fats are added to the mixture of organic materials with lipide content.

15. Method according to any one of the preceding claims, **characterised in that** hydrocarbons are added to the mixture of organic materials with lipide content.

16. Method according to any one of the preceding claims, **characterised in that** the different lipides are processed within the mixture of the starting material to form triglycerides.

17. Method according to any one of the preceding claims, **characterised in that** the lipides are processed within the mixture of the starting material to form a homogenous triglyceride.

18. Method according to any one of the preceding claims, **characterised in that** before isolation of the lipides free fatty acids are extracted from the mixture.

19. Method according to any one of the preceding claims, **characterised in that** colorants and/or aromatics are added to the obtained raw materials.

20. Method according to any one of the preceding claims, **characterised in that** candles are produced from the obtained raw materials in a casting, press-moulding or drawing method or by pasty filling methods or foam methods.

21. Use of a mixture of food residues, old cooking fats and/or foodstuff returns from the foodstuff industry, and/or animal fats which arise as slaughter byproducts, as a starting material, which contains lipides, for production of raw materials for candle production and heat storage material such as, for example, wax, wherein the lipides are extracted and/or refined and/or hydrogenated from the starting material, wherein
a) the starting material is washed and comminuted in a first method step,
b) the lipides are isolated and processed to form triglycerides in a second method step and
c) subsequently the triglycerides are refined and hydrogenated to form the raw material for the candle production or for the heat storage material.

## Revendications

1. Procédé de fabrication de matières premières pour la fabrication de bougies et pour un matériau accumulateur de chaleur, tel que par exemple des cires, dans lequel, à partir d'une matière de départ contenant des lipides, on extrait et/ou on raffine et/ou on hydrogène les lipides, **caractérisé en ce que**, en tant que matière de départ, un mélange de résidus alimentaires, de graisses alimentaires usées et/ou de retours de produits alimentaires provenant de l'industrie agro-alimentaire, et/ou de graisses animales, qui sont obtenues en tant que sous-produits des abattoirs,
a) dans une première étape, subit un lavage et un broyage,
b) dans une deuxième étape, les lipides sont isolés et transformés en triglycérides,
c) puis les triglycérides sont raffinés et hydrogénés pour donner la matière première pour la fabrication de bougies ou pour le matériau accumulateur de chaleur.

2. Procédé selon la revendication 1, **caractérisé en ce que** le mélange est mis en suspension avant la deuxième étape.

3. Procédé selon la revendication 1 ou 2, **caractérisé en ce que**, entre la première et la deuxième étapes, et dans le cadre d'une étape supplémentaire, on déshydrogène et stérilise la matière de départ sous une surpression de 10⁵ Pa à 5 x 10⁵ Pa, de préférence de 3 x 10⁵ Pa, et à une température comprise entre 353 K et 453 K, de préférence de 403 K.

4. Procédé selon les revendications 1 à 3, **caractérisé en ce que** la matière première pour la fabrication de bougies ou le matériau accumulateur de chaleur est obtenue par l'une des étapes suivantes :
a) centrifugation,
b) filtration,
c) fragmentation,
d) élution avec un solvant.

5. Procédé selon l'une des revendications précédentes, **caractérisé en ce que** les lipides sont amenés au raffinage et/ou à l'hydrogénation sous forme liquide, de préférence à une température de 333 K à 353 K, en particulier de 343 K.

6. Procédé selon l'une des revendications précédentes, **caractérisé en ce que** les lipides sont, éventuellement plusieurs fois, estérifiés et/ou réestérifiés dans un procédé en circuit fermé.

7. Procédé selon l'une des revendications précédentes, **caractérisé en ce que** le raffinage comprend au moins l'une des étapes suivantes :
a) démucilagination (dissociation des savons)
b) neutralisation (désacidification et élimination des sels)
c) lavage
d) séchage
e) blanchiment, et éventuellement blanchiment subséquent
f) filtration
g) désodorisation.

8. Procédé selon l'une des revendications précédentes, **caractérisé en ce que** les lipides sont soumis à une hydrogénation, en particulier sous pression.

9. Procédé selon la revendication 7, **caractérisé en ce que** les lipides sont soumis à une hydrogénation par utilisation d'un catalyseur.

10. Procédé selon la revendication 9, **caractérisé en ce qu'**on utilise en tant que catalyseur du nickel ou un métal précieux, tel que par exemple le platine.

11. Procédé selon l'une des revendications 8 à 10, **caractérisé en ce que** les lipides sont soumis à une hydrogénation jusqu'à un indice d'iode ≤ 80.

12. Procédé selon l'une des revendications 8 à 10, **caractérisé en ce que** les lipides sont soumis à une hydrogénation jusqu'à un indice d'iode ≤ 20.

13. Procédé selon l'une des revendications précédentes, **caractérisé en ce que** qu'on utilise en tant que matière de départ un mélange de matières organiques contenant des lipides, d'origine végétale et animale.

14. Procédé selon l'une des revendications précédentes, **caractérisé en ce qu'**on ajoute des huiles et des graisses minérales au mélange de matériaux organiques contenant des lipides.

15. Procédé selon l'une des revendications précédentes, **caractérisé en ce qu'**on ajoute des hydrocarbures au mélange de matériaux organiques contenant des lipides.

16. Procédé selon l'une des revendications précédentes, **caractérisé en ce que** les différents lipides sont transformés en triglycérides à l'intérieur du mélange de la matière de départ.

17. Procédé selon l'une des revendications précédentes, **caractérisé en ce que** les lipides sont transformés en un triglycéride homogène à l'intérieur du mélange de la matière de départ.

18. Procédé selon l'une des revendications précédentes, **caractérisé en ce que**, avant isolement des lipides, des acides gras libres sont extraits du mélange.

19. Procédé selon l'une des revendications précédentes, **caractérisé en ce qu'**on ajoute aux matières premières obtenues des colorants et/ou des aromatisants.

20. Procédé selon l'une des revendications précédentes, **caractérisé en ce que**, à partir des matières premières obtenues, on fabrique des bougies par le procédé par coulée, pressage ou tirage, ou par des procédés de remplissage à l'état pâteux, ou par des procédés de moussage.

21. Utilisation d'un mélange de résidus de produits alimentaires, de graisses alimentaires usées et/ou de retours de produits alimentaires provenant de l'industrie agro-alimentaire et/ou de graisses animales, qui sont obtenus en tant que sous-produits des abattoirs, en tant que matière de départ contenant des lipides, pour la fabrication de matières premières pour la fabrication de bougies et pour un matériau accumulateur de chaleur, tel que par exemple des cires, les lipides étant extraits et/ou raffinés et/ou hydrogénés à partir de la matière de départ, pour laquelle
a) dans une première étape, la matière de départ est lavée et broyée,
b) dans une deuxième étape, les lipides sont isolés et transformés en triglycérides,
c) puis les triglycérides sont raffinés et hydrogénés pour donner la matière première pour la fabrication de bougies ou le matériau accumulateur de chaleur.
